**Europäisches Patentamt**

**European Patent Office**

**Office européen des brevets**

(19)

(11) Veröffentlichungsnummer: **0 105 456**
**A2**

(12) ## EUROPÄISCHE PATENTANMELDUNG

(21) Anmeldenummer: **83109647.4**

(22) Anmeldetag: **27.09.83**

(51) Int. Cl.³: **G 09 F 11/30**
**G 03 B 23/02, B 42 F 7/14**

(30) Priorität: **04.10.82 DE 3236644**

(43) Veröffentlichungstag der Anmeldung:
**18.04.84 Patentblatt 84/16**

(84) Benannte Vertragsstaaten:
**AT BE CH DE FR GB IT LI LU NL SE**

(71) Anmelder: **Licinvest AG**
**Hartbertstrasse 9**
**CH-7002 Chur(CH)**

(72) Erfinder: **Ackeret, Pter**
**Allmendstrasse 18**
**CH-8700 Küsnacht(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) **Behälter für einen Bilderstapel.**

(57) Behälter für einen Bilderstapel variabler Dicke mit mindestens zwei Bauteilen, die zueinander relativbeweglich sind, und von denen eines den Stapel an mindestens einer seiner Kanten hält, während der Stapel in Richtung einer frei gebliebenen Kante entnehmbar ist.

Fig. 1

EP 0 105 456 A2

"Behälter für einen Bilderstapel"
-------------------------------------

Die Erfindung betrifft einen Behälter für einen Bilderstapel variabler Dicke mit den im Oberbegriff des Patentanspruchs 1 genannten Merkmalen. Ein derartiger Behälter ist aus der US-PS 4 242 820 bekannt.

Bei dem bekannten Behälter sind senkrecht zum Sichtfenster Querwände vorgesehen, die zumindest das am Fenster präsentierte Bild relativ zu diesem in seiner Position seitlich abstützen; dies soll nachstehend kurz als "Bildzentrierung" bezeichnet werden. Gemäß der Lehre der vorgenannten Druckschrift soll die Anlegevorrichtung beim Öffnen des Behälters inaktiviert werden, damit der Bilderstapel bequem entnehmbar ist. Wenn jedoch die Entnahme in einer Richtung senkrecht zur Ebene der Bilder erfolgt und wenn die der Bildzentrierung dienenden Wände mit - an sich ja erwünschtem - geringem Abstand von den Bildkanten stehen, ist es oft recht mühevoll, den Stapel herauszuschütteln, wobei dieser sogar noch durcheinandergebracht werden kann und die Bilder möglicherweise beschädigt werden.

Aufgabe der Erfindung ist es, den gattungsgleichen Behälter derart auszubilden, daß die Bilder bequem und ohne Gefahr der Beschädigung entnommen werden können.

Die erfindungsgemäß vorgesehene Lösung dieser Aufgabe ergibt sich aus dem Patentanspruch 1; die Unteransprüche definieren zweckmäßige und vorteilhafte Weiterbildungen dieses Vorschlags.

Ausführungsbeispiele des Gegenstandes der Erfindung werden nachstehend unter Bezugnahme auf die beigefügten Zeichnungen im einzelnen erläutert.

Fig. 1 bis 4    beziehen sich auf ein erstes Ausführungsbeispiel,

Fig. 5 bis 7    betreffen eine zweite Ausführungsform,

Fig. 8 und 9    zeigen eine dritte Ausführungsform,

Fig. 10    zeigt perspektivisch und

Fig. 11    zeigt im Schnitt nach Linie 11-11 in Fig. 10 eine weitere Ausführungsform,

Fig. 12 und 13    stellen in analoger Weise eine weitere Ausführungsform dar,

Fig. 14    zeigt perspektivisch eine weitere Ausführungsform,

Fig. 15    ist ein Schnitt nach Linie 15-15 der Fig. 14,

Fig. 16    erläutert die Wirkungsweise dieser Ausführungsform,

Fig. 17 und 18    zeigen eine Ausführungsform ähnlich der nach Fig. 8 und 9,

Fig. 19 bis 21    beziehen sich auf eine weitere Ausführungsform,

Fig. 22 bis 25    gehören zu einer weiteren Ausführungsform,

Fig. 26 bis 28    betreffen eine weitere Ausführungsform,

Fig. 29 bis 32    beziehen sich auf ein weiteres Ausführungsbeispiel, und

Fig. 33 bis 36    gehören zu einem letzten Ausführungsbeispiel.

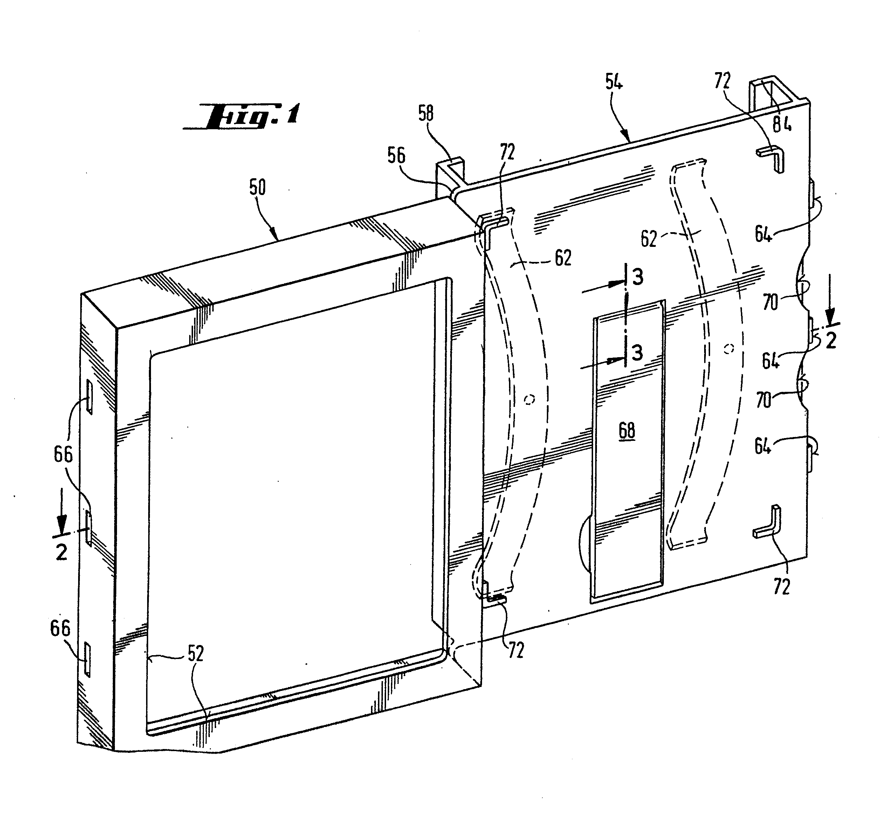

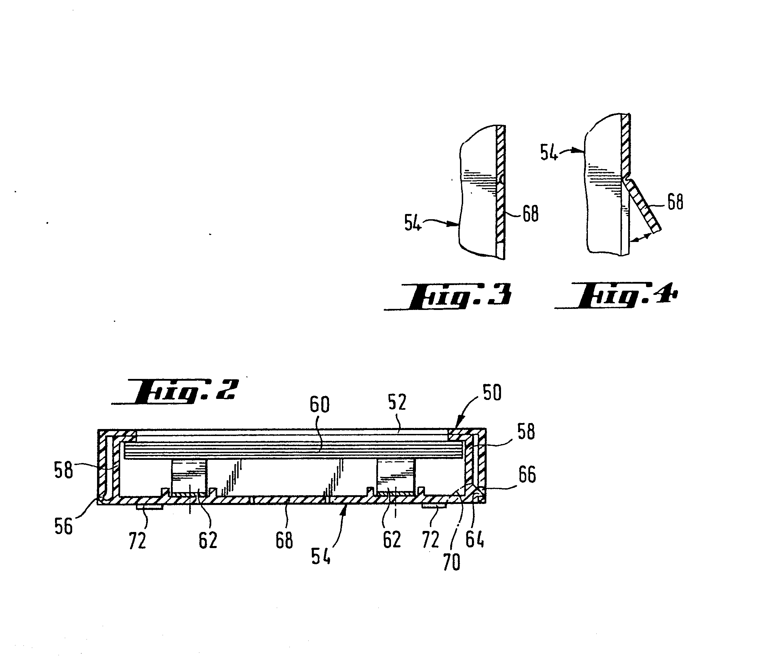

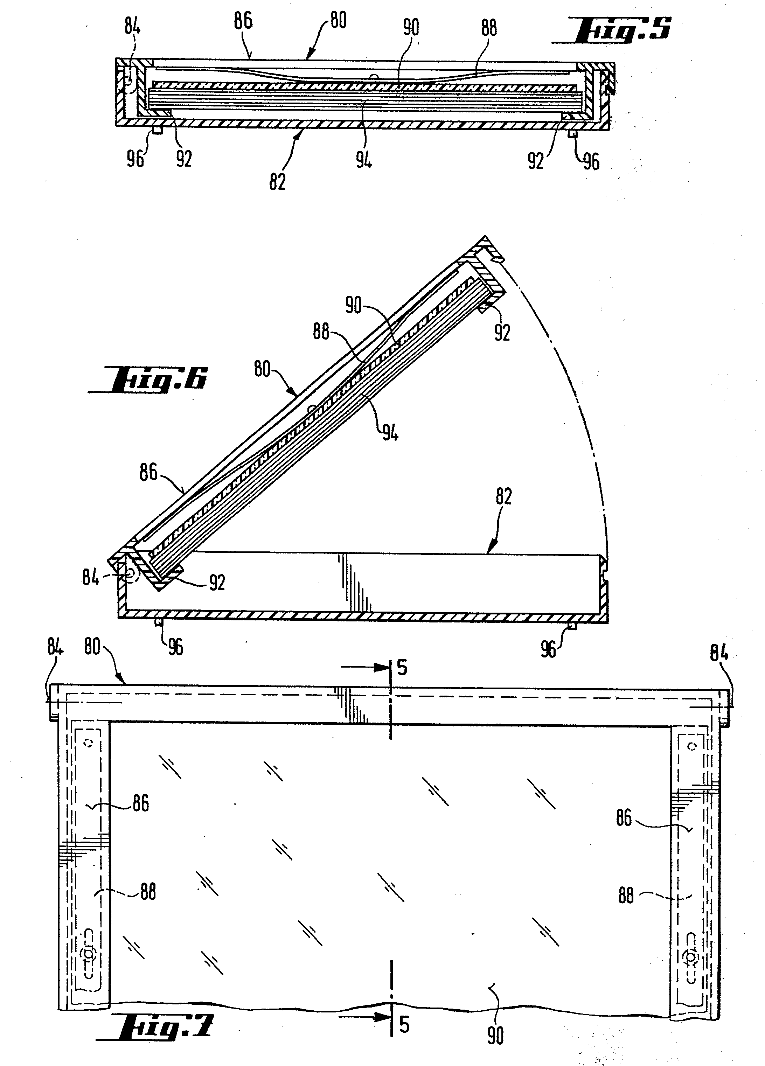

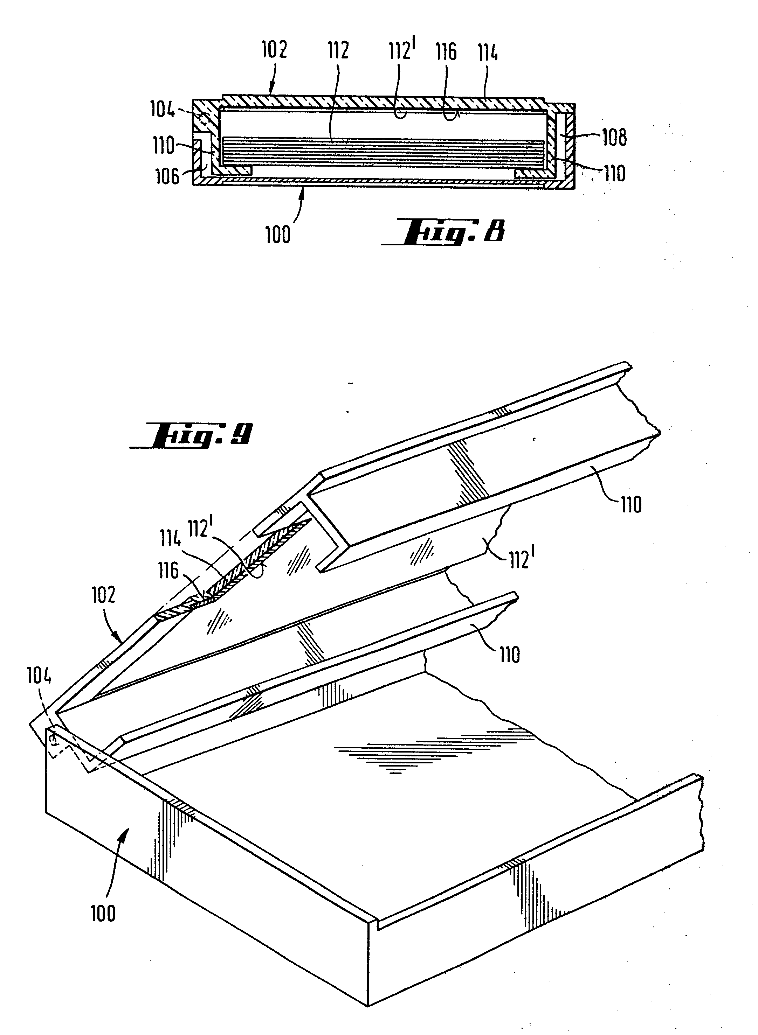

Fig. 1 zeigt in Perspektive einen aufgeklappten Behälter, Fig. 2 zeigt den geschlossenen Behälter im Querschnitt und Fig. 3 und 4 dienen der Erläuterung des Aufstellfußes.

Der Behälter umfaßt ein äußeres rahmenförmiges Gehäuse 50 mit einem Sichtfensterausschnitt 52, der gegebenenfalls verglast sein kann. Das Gehäuse bildet gemeinsam mit einem zweiten Bauteil 54 ein einstückiges Spritzteil aus einem Material, das gute Elastizitätseigenschaften aufweist. Die beiden Teile 50 und 54 sind demgemäß miteinander durch ein ebenfalls einstückig mit beiden ausgebildetes Gelenk 56 verbunden. Das Bauteil 54 umfaßt zwei angeformte Winkelschenkel 58, die den in den Behälter eingesetzten Stapel an seinen zwei gegenüberliegenden Längskanten umfassen und halten. Im geschlossenen Zustand (Fig. 2) wird der Stapel 60 von in das Bauteil 54 eingesetzten vorzugsweise als Blattfedern ausgebildeten Anlegeelementen 62 gegen die Fensteröffnung 52 angedrückt. Der Verriegelung des Behälters im Schließzustand dient eine Verriegelungsnase 64, die in eine entsprechende Öffnung 66 des Gehäuseteiles 50 eingreift; im Ausführungsbeispiel sind sogar drei parallele Systeme 64 , 66 vorgesehen. Schließlich weist der Behälter an der Rückseite des Bauteils 54 noch einen angeformten Aufstellfuß 68 auf, der es erlaubt, den Behälter in bequemer Schräglage sowohl im Hochformat als auch im Querformat auf einer Horizontalfläche aufzustellen. Die Grifföffnungen 70 im Bauteil 54 ermöglichen das Lösen der Verriegelungen 64, 66 durch Eingreifen mit den Fingerspitzen, und an das Bauteil 54 auf der Außenseite angeformte Positionierecken 72 passen in die eingetiefte Fensteröffnung 52 eines weiteren gleichartigen Behälters, so daß man die Behälter beliebig übereinanderstapeln kann.

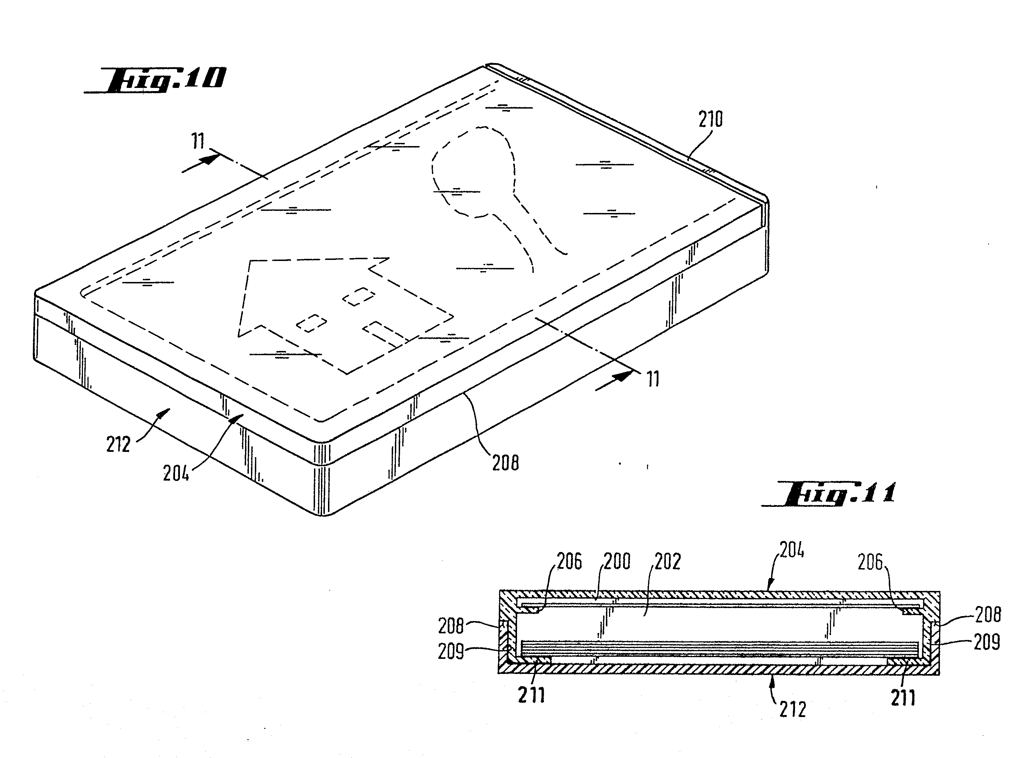

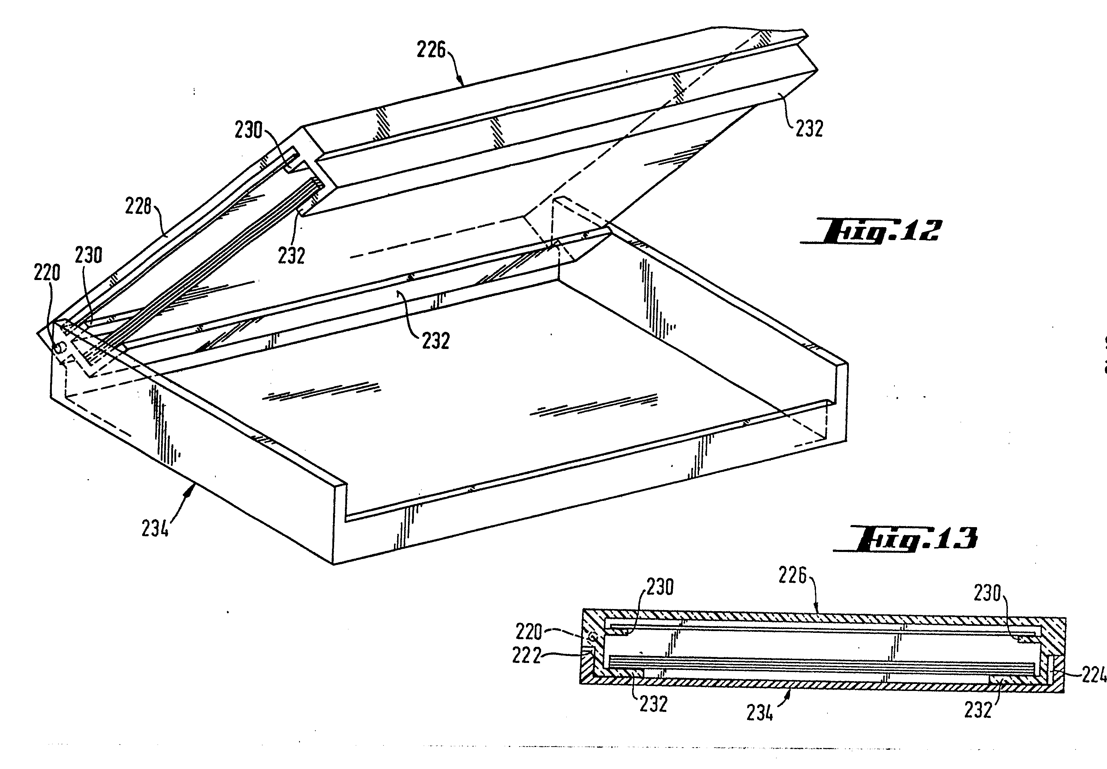

Fig. 5 bis 10 zeigen ein weiteres Ausführungsbeispiel. Hier besteht der Behälter aus zwei getrennt gefertigten, gemeinsam ein Gehäuse bildenden Teilen, nämlich einem Fensterteil 80 und einem Verschlußteil 82 (Fig. 6). Das Fensterteil 80 ist in der Draufsicht etwa welche über ein Gelenk 84 miteinander verbunden sind. rahmenförmig (Fig. 7) und besitzt an der einwärts gewandten Unterseite von zwei seiner einander gegenüberliegenden Rahmenschenkel 86 Blattfedern 88, die sich dort abstützen und mit ihrem nach unten ragenden Bogen eine Sichtscheibe 90 aus einem glasklaren Material, z.B. einem glasklaren Polystyrolmaterial, gegen einen Stapel Bilder drücken. Der Bilderstapel stützt sich auf Leisten 92 ab, die ebenfalls an das Fensterteil 80 angeformt sind und die beiden entsprechenden Kanten des Bilderstapels 94 von hinten umgreifen und halten. Hinsichtlich der Positionierelemente 96 gilt das zum vorigen Ausführungsbeispiel Gesagte in analoger Weise.

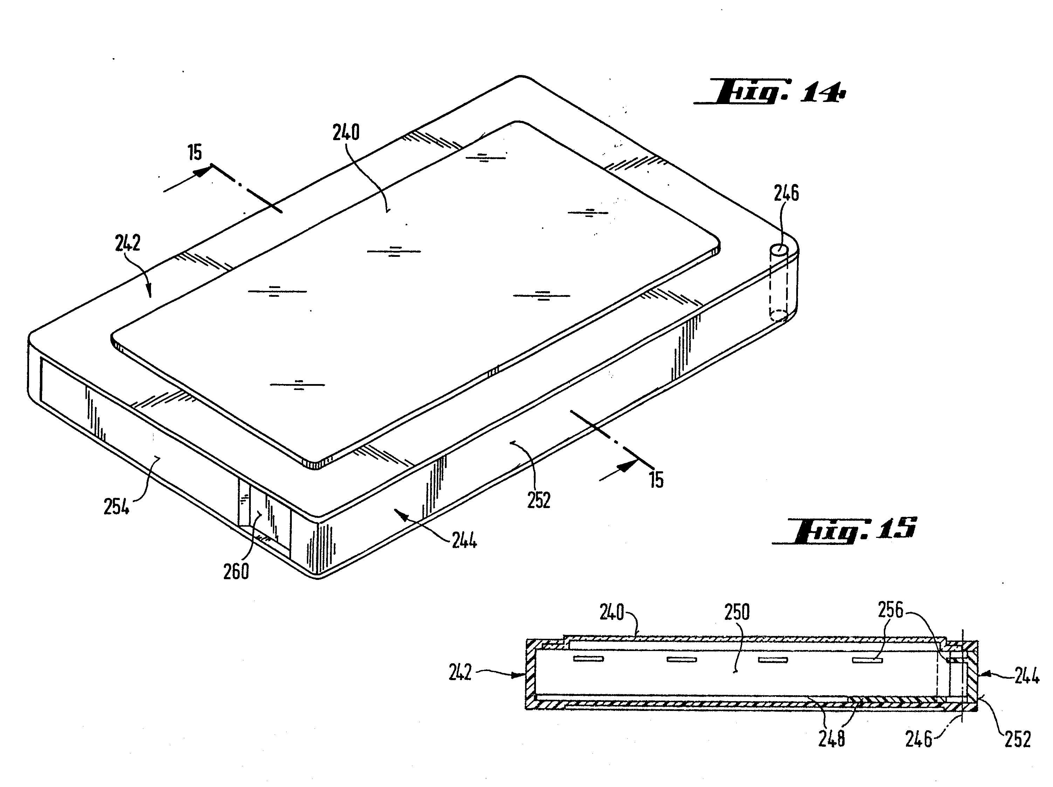

Die Fig. 8 und 9 zeigen im Schnitt (Fig. 8) bzw. perspektivisch in Teilansicht und teilweise weggebrochen (Fig. 9) ein weiteres Ausführungsbeispiel. An ein Bodenteil 100 ist ein Entnahmeteil 102 bei 104 angelenkt. Freiräume 106 und 108 erlauben die Schwenkbewegung ohne Anecken. Die an das Entnahmeteil 102 einstückig angeformten Winkel 110 dienen wie in den vorigen Beispielen dazu, die Entnahme des Stapels 112 zu erleichtern, der nach dem Auseinanderklappen der beiden Teile leicht an der offen liegenden Stapelkante, also in Fig. 9 links vorn, herausgezogen werden kann.

Die Mittel, um das oberste Bild 112' des Stapels in Anlage an dem Sichtfenster 114 des Entnahmeteils zu halten, sind in der Zeichnung als Klebschicht 116 angedeutet; derartige Beschichtungen sind handelsüblich, ermöglichen das unbeschädigte Ablösen dieses Bildes und nachfolgendes Wiederfestlegen eines anderen Bildes, ohne daß das Bild oder auch die Haftschicht beschädigt würden. Demgemäß kann man auf diese Weise eine sehr einfache Behälterkonstruktion schaffen.

Sehr einfach ist die Ausführungsform nach Fig. 10 und 11. Eine flache Kammer 200 und eine weite Kammer 202 sind in einem einzigen Bauteil 204 ausgebildet, voneinander durch angeformte Stege 206 getrennt. In der flachen Kammer hat ein am Fenster präsentiertes Bild Platz, während die Kammer 202 den Reststapel aufnimmt. Der bei 208 abgestufte Rand 209 des Bauteils 204 zieht sich um drei Schmalseiten des Bauteils 204, während die vierte zunächst offen ist, aber von der hochstehenden Schiene 210 eines zweiten Bauteils 212 verdeckt wird, die in Form und Größe so ausgelegt ist, daß sie den Rand 209 vervollständigt. Im übrigen hat dieses Bauteil 212 die Form einer nach oben offenen Schachtel, in die die Abstufung des Randes 209 hineinpaßt und deren Außenränder mit jenem dann bündig liegen. Die beiden Bauteile halten reibungsschlüssig zusammen. Wie zuvor, dienen die angeformten Winkel 211 der Entnahme des Reststapels zusammen mit dem Einzelbild, und beide können dann an der Stelle herausgenommen werden, die bei geschlossenem Behälter durch die Schiene 210 verschlossen ist.

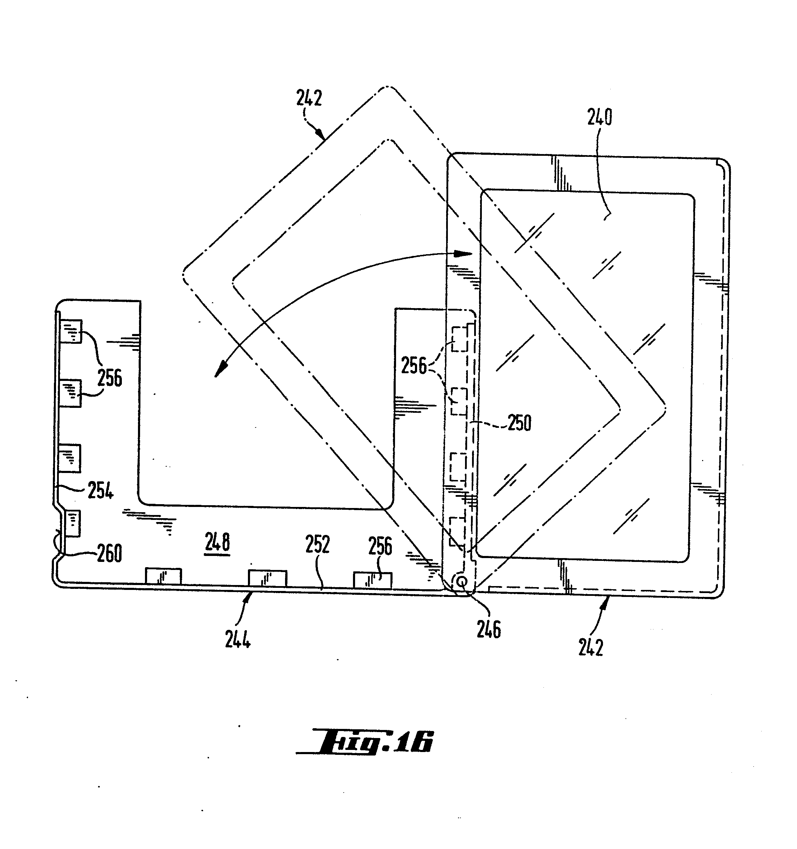

Ähnlich ist die Ausführungsform nach Fig. 12 und 13. Hier werden die beiden Bauteile nicht zusammengesteckt, wie beim zuvor beschriebenen Beispiel, sondern sie sind gelenkig bei 220 miteinander verbunden. Freiräume 222 und 224 ermöglichen die relative Verschwenkung. Es ist anzumerken, daß hier ebenfalls ein einziges Bauteil 226 das Fenster 228, Trennelemente 230 zwischen einer schmalen und einer weiten Kammer und schließlich den Reststapel griffbereit haltende Klammern 232 in einstückiger Ausführung umfaßt, während das zweite Bauteil 234 praktisch nur noch die freien Kanten und die zugängliche Rückseite der Bilder verdeckt, wenn der Behälter geschlossen ist. Das Gelenk 220 kann durch Löcher im einen und angespritzte Zapfen im anderen Bauteil gebildet sein, wobei die Montage unter kurzer elastischer Verformung eines oder beider Bauteile durch Einschnappen erfolgt.

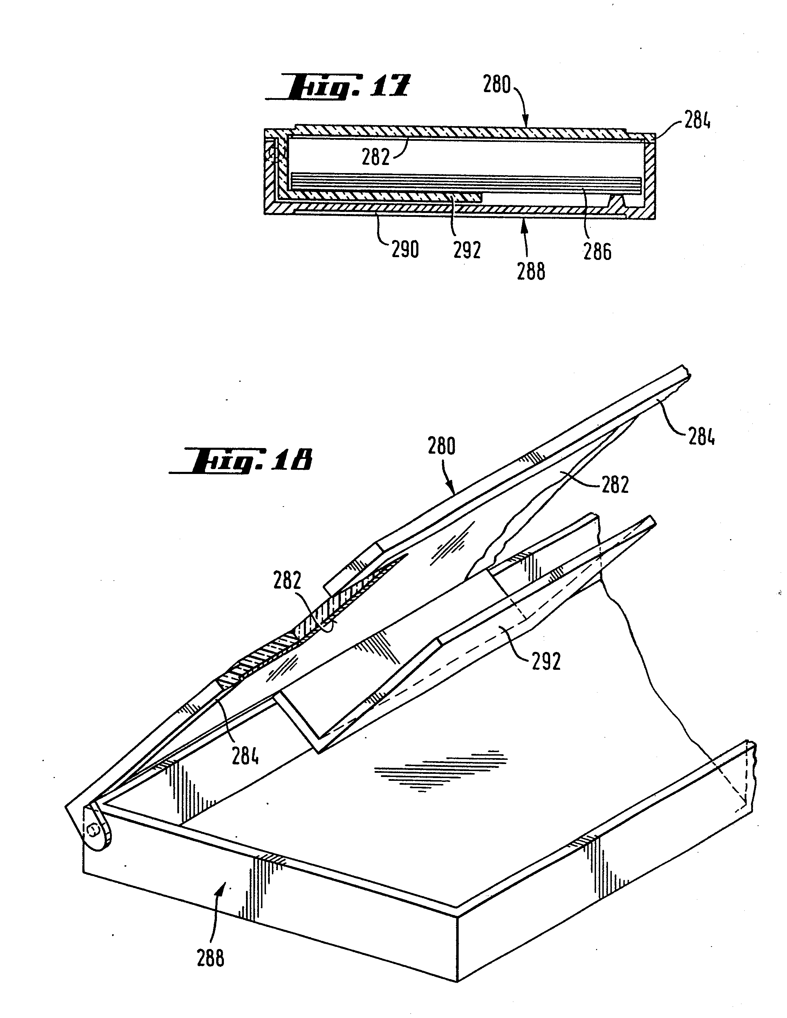

Fig. 14 bis 16 beziehen sich auf ein weiteres Ausführungsbeispiel, bei dem aus einem mit Sichtfenster 240 versehenen Gehäuse 242 ein im Umriß U-förmiges Innenteil 244 herausschwenkbar ist. Die Schwenkung erfolgt um einen Zapfen 246 in einer Gehäuseecke. Das Innenteil umfaßt eine längs einer Gehäusewandung geführte Platte 248 mit von diesen senkrecht hochstehenden Wänden 250, 252 und 254, an denen sich jeweils eine Stapelkante abstützen kann. Von diesen Wänden wiederum ragen Lappen 256 parallel zur Platte 248 nach innen und umfassen den Reststapel, während zwischen den Lappen 256 und dem im Gehäuse 242 ausgebildeten Sichtfenster 240 ein einzelnes Bild Platz findet, das an dem Sichtfenster präsentiert wird. Eine eingesenkte Fingeröffnung 260 erleichtert das Ausklappen des Innenteils, aus dem dann die Bilder in Richtung der U-Öffnung leicht herausnehmbar sind.

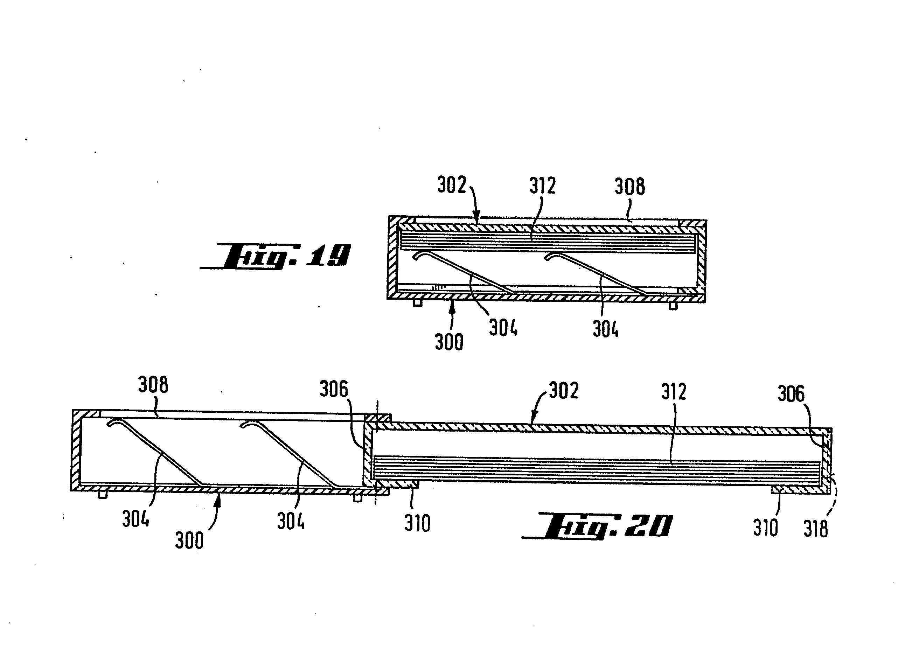

Fig. 17 zeigt im Schnitt und Fig. 18 in einer teilweise weggebrochenen perspektivischen Darstellung eine weitere Ausführungsform der Erfindung, die ähnlich der nach Fig. 8 und 9 ist insofern, als an dem Klappdeckel 280, der aus glasklarem Kunststoffmaterial besteht, das eine zu präsentierende Bild 282 mittels eines ebenfalls glasklaren Haftmittels flach anliegend präsentiert wird. Die abwärts ragenden und die Kante dieses Bildes umgreifenden Ränder 284 dienen als Zentriermittel. Der Rest des Stapels 286 ruht in dem schachtelartigen Bodenteil 288. Die bodenseitige Vertiefung 290 ist komplementär zu dem hochstehenden Abschnitt des glasklaren Elements 280, so daß wiederum die Behälter bequem gestapelt werden können. Den Reststapel beim Öffnen des Behälters umgreifende und zur Entnahme präsentierende Elemente 292 sind erkennbar.

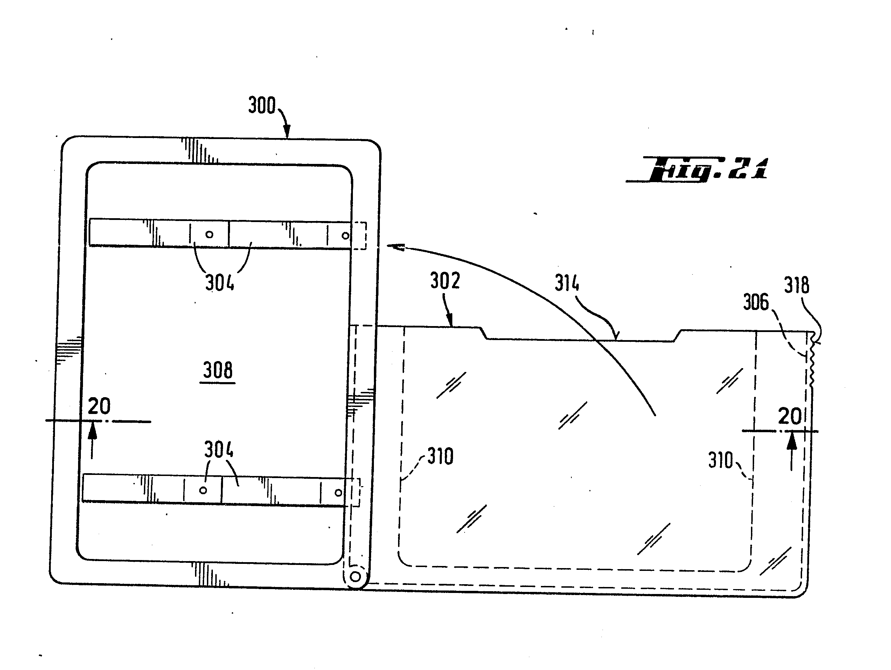

Fig. 19 bis 21 zeigen ein weiteres Ausführungsbeispiel. Fig. 19 ist ein Schnitt durch den geschlossenen Behälter, der aus einem Gehäuse 300 und einem aus diesem herausklappbaren Innenteil 302 besteht. In dem Gehäuse 300 sind als Anlagevorrichtung dienende Federn 304 montiert, während das Innenteil 302 den Stapel an seinen beiden 312 Querkanten umgreifende Winkel 306 einstückig angeformt aufweist. Zwischen den zum Sichtfenster 308 des Gehäuses 300 parallelen Schenkeln 310 der Winkelstücke 306 können die Federn 304 hindurchgreifen und den gesamten Stapel 312 und insbesondere dessen oberstes Bild gegen die Sichtfensteröffnung drücken. Die Fig. 21 zeigt schematisiert die Draufsicht. Man erkennt, daß der Stapel ähnlich wie bei der Ausführungsform nach Fig. 14 bis 16 an drei seiner vier Kanten umfaßt wird und an seiner vierten Kante lose herausgezogen werden kann, erleichtert durch die Griffausnehmung 314 des Innenteils 302. Die Verriegelung ist nicht im einzelnen dargestellt, doch weist die eine Querwand 306 des Innenteils 302 einen geriffelten Griffbereich 318 auf, der die Handhabung vereinfacht.

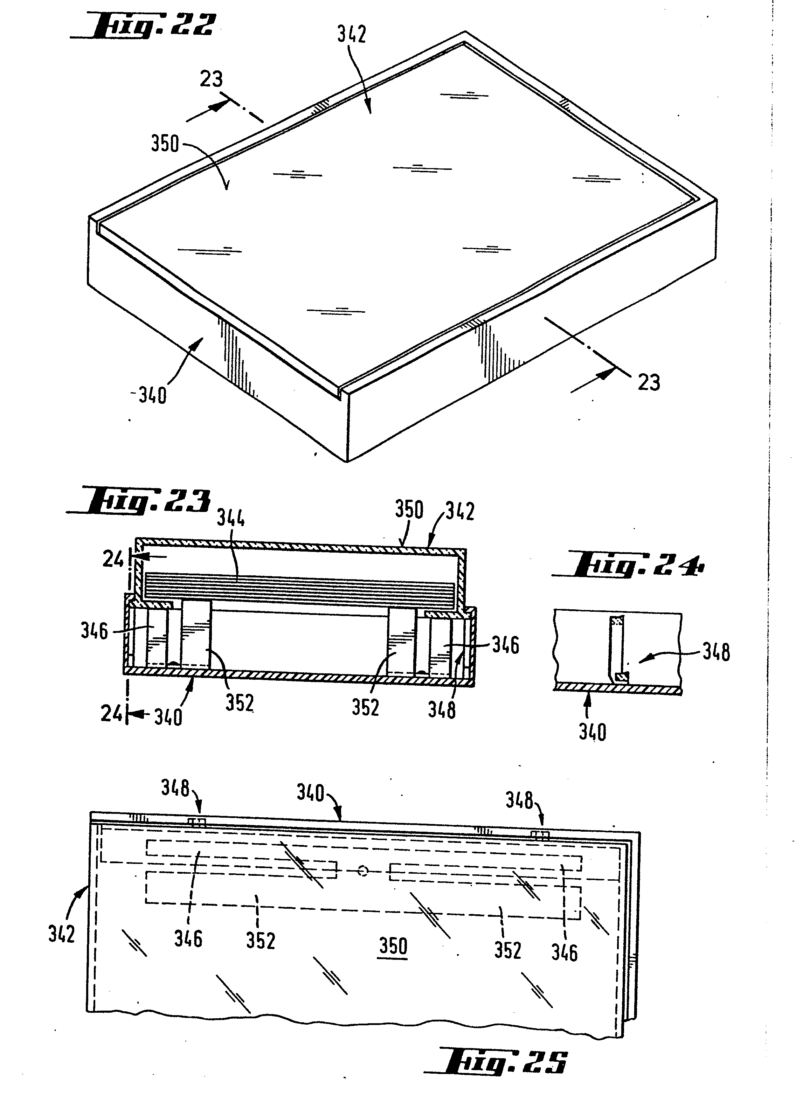

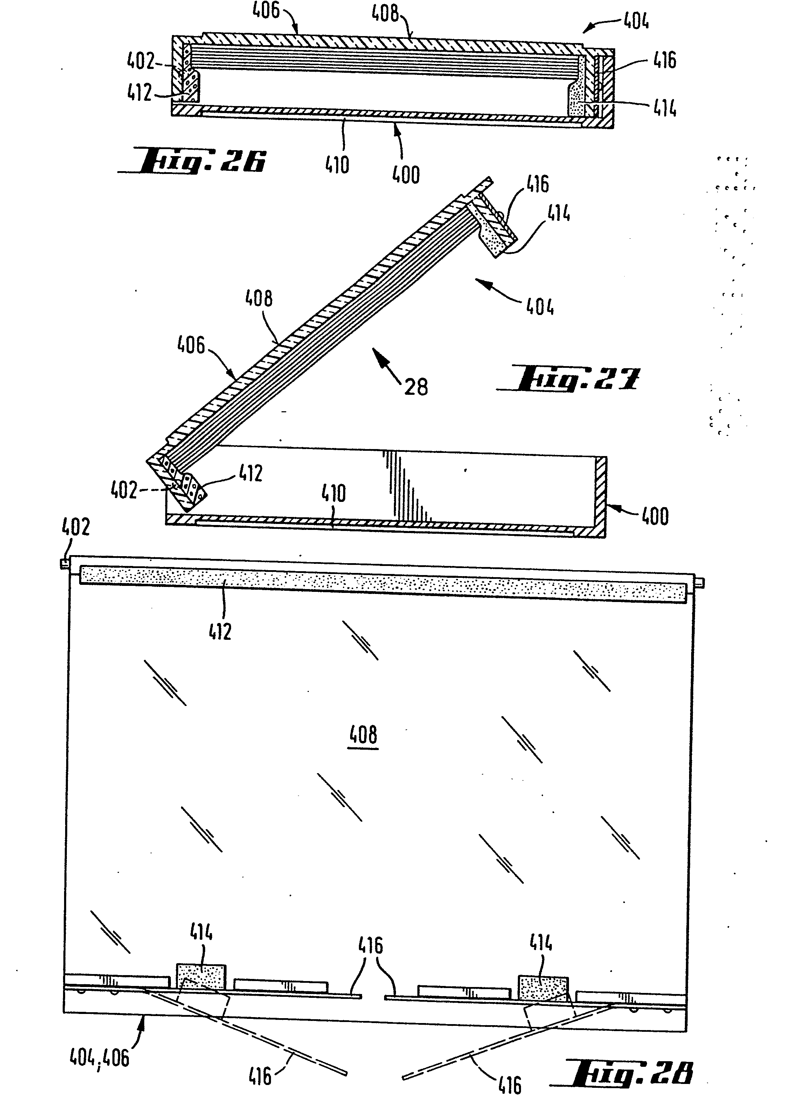

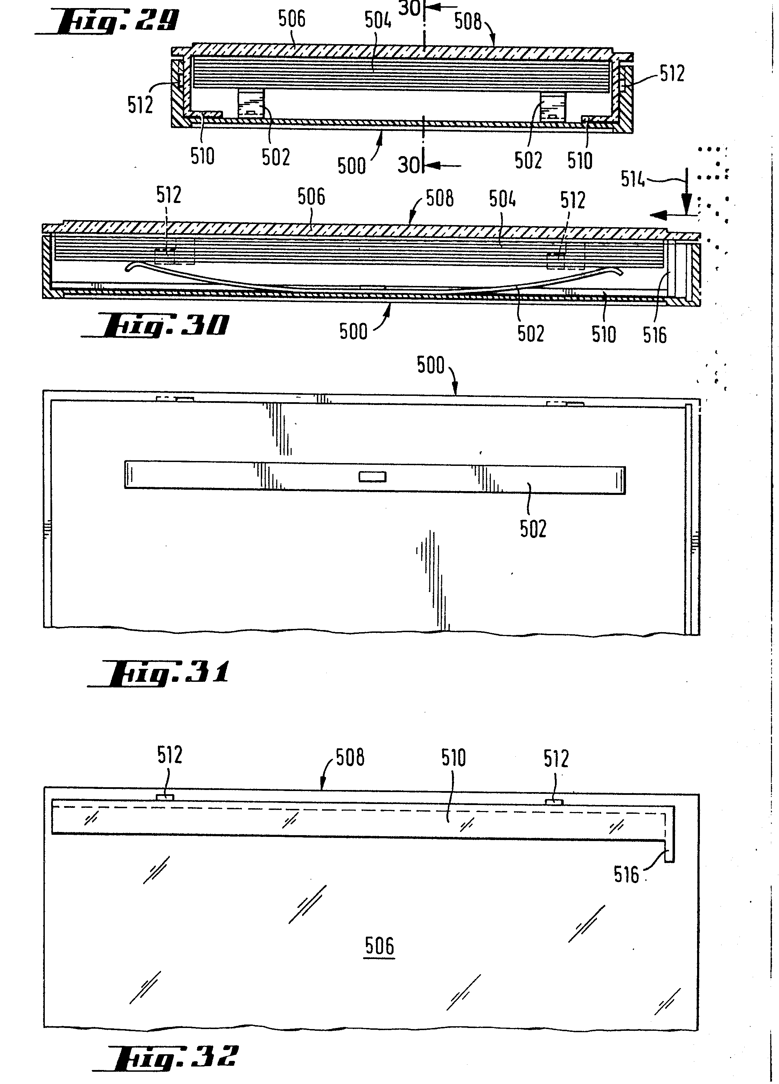

Ein weiteres Ausführungsbeispiel zeigen die Fig. 22 bis 25. Wie in Fig. 22 bei der perspektivischen Darstellung des geschlossenen Behälters erkennbar, besteht auch dieser aus einem Bodenteil 340 und einem Innenteil 342. Beide Teile sind zueinander gleitverschieblich, und zwar in Richtung senkrecht zur Hauptebene der den Stapel 344 bildenden Bilder, wie in der Schnittdarstellung nach Fig. 23 gut erkennbar. Das Innenteil 342 wird gegenüber dem Bodenteil 340 durch Federn 346 in eine in Fig. 23 dargestellte Offenposition vorgespannt gehalten, und zum Verriegeln in der Schließstellung nach Fig. 22 und 24 dient eine Bajonettverschlußanordnung 348, deren Bauweise und Wirkungsweise sich ohne weiteres aus Fig. 24 entnehmen läßt.

Als Anlegeanordnung für den Stapel zum Anlegen an die Deckfläche oder Fensterfläche 350 des insgesamt aus glasklarem Kunststoff bestehenden Innenteils dienen Federn 352, die jedoch in der Entnahmeposition nach Fig. 23 entspannt sind, so daß der Stapel lose ist und leicht seitlich herausnehmbar ist. Die beiden Federsysteme 346 und 352 können jeweils aus den äußeren Schenkeln bzw. inneren Schenkeln von zwei parallelen H-förmigen, einstückig gefertigten Blattfedern bestehen, wie aus der Draufsicht nach Fig. 25 ohne weiteres entnehmbar ist.

Fig. 26 bis 28 zeigen eine Ausführungsform, bei der der gesamte Stapel an zwei seiner einander gegenüberliegenden Kanten von einem volumenkompressiblen Element umgriffen ist.

Diese Behälterbauart ist in Fig. 26 geschlossen im Schnitt, in Fig. 27 geöffnet im Schnitt und in Fig. 28 in Draufsicht von innen auf das Oberteil aus Fig. 26 dargestellt.

Der Behälter umfaßt ein unteres Abdeck- oder Bodenteil 400 sowie ein relativ zu diesem um ein Lager 402 schwenkbewegliches Fensterteil 404. Das Fensterteil 404 ist ein aus glasklarem Kunststoff gespritztes im Schnitt im wesentlichen U-förmiges Bauteil 406 mit nach außen vorspringendem Sichtfensterteil 408, dessen Umriß komplementär in die bodenseitige Ausnehmung 410 des Bodenteils 400 paßt, um in der nun schon bekannten Weise die Stapelung zu ermöglichen. In zwei einander gegenüberliegenden Innenwandungen des Fensterteils 406 sind Kissen oder Streifen 412 bzw. 414 aus volumenkompressiblem Material befestigt, z.B. eingeklebt; bei dem Material kann es sich z.B. um Schaumkunststoff handeln. Wie der Schnittdarstellung nach Fig. 26 oder 27 leicht entnehmbar ist, werden die Bilder des Stapels, und zwar alle Bilder, reibungsschlüssig gehalten, so daß es nicht erforderlich ist, sie auch noch an ihren jeweils quer zu den Wandungen verlaufenden Enden zu halten oder abzustützen.

Wie Fig. 28 erkennen läßt, sind die Kissen 414 an einer nicht durchgehenden stegartig ausgebildeten Klappe 416 befestigt, jeweils eine für jedes Kissen, die elastisch in die in gestrichelten Linien angedeutete Position auslenkbar sind, so daß in dieser Position der Stapel entnehmbar ist.

Fig. 29 bis 32 beziehen sich auf eine weitere Ausführungsform. Eine am Boden 500 eines Behälterteils montierte Federanordnung, die hier aus zwei gekrümmten Blattfedern 502 besteht, drückt den Bilderstapel 504 nach oben gegen das Sichtfenster 506, das in einem Abdeckteil 508 eingesetzt, z.B. eingeklebt ist oder einteilig mit diesem gefertigt wurde. Das Abdeckteil 508 weist die nun schon hinlänglich bekannten, Winkelprofil aufweisenden Arme 510 auf, die den Stapel neben der Federanordnung 502 untergreifen. Um entgegen der Vorspannung der Federn 502 den Stapel 504 mit dem Sichtfenster 506 in dem Gehäuse 500 zu halten, sind an die Winkelstücke 510 Nocken 512 angeformt, die längs entsprechender komplementärer Nuten des Gehäuseteils 500 eingeführt werden können und dann durch eine Querbewegung (Richtungspfeile 514 in Fig. 30) bajonettartig eingerastet werden. Die Lage der Bajonettverriegelungen (zwei auf jeweils zwei einander gegenüberliegenden Kanten) und der Federn in den Bauteilen ist in Fig. 31 gut erkennbar; Fig. 32 zeigt eine Innenansicht des das Fenster 506 aufweisenden Bauteils 508 und läßt erkennen, daß an jeweils einem Ende der Winkelteile 510 noch ein Querwinkel 516 ausgebildet ist, so daß der Stapel 504 an drei seiner Kanten umgriffen ist, während er an der vierten Kante leicht herausgenommen werden kann, wenn durch Entriegeln der Bajonettverschlüsse die beiden Bauteile des Behälters voneinander gelöst worden sind.

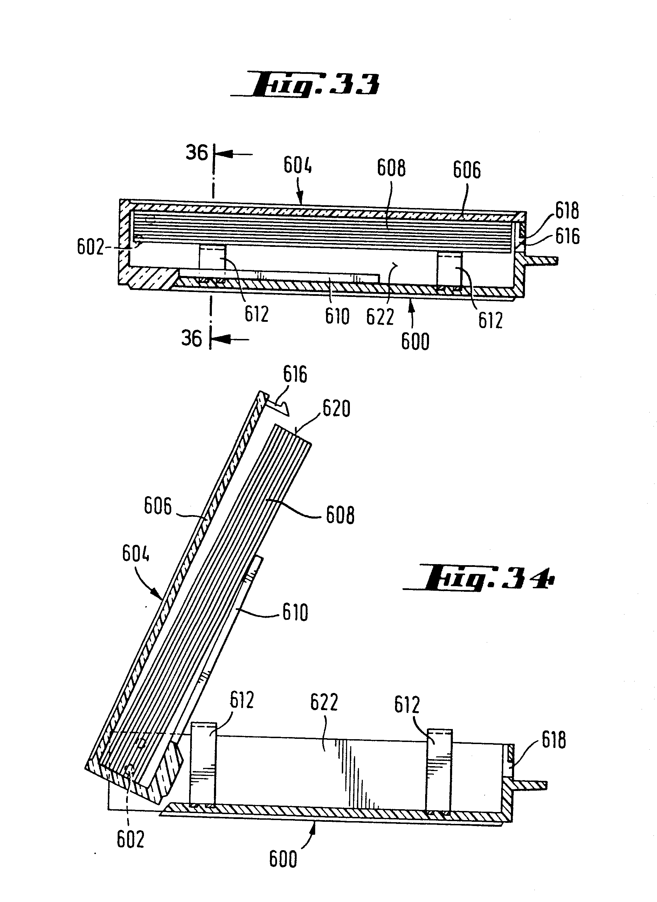

Fig. 33 bis 36 schließlich zeigen ein letztes Ausführungsbeispiel. Hier ist an einem Behälterunterteil 600 mittels eines Scharniers 602 ein Behälteroberteil 604, das zwischen einem Sichtfenster 606 und einem den Stapel 608 nur an einer seiner Kanten umgreifenden Lappen 610 drehbeweglich angelenkt. Im Unterteil 600 sind Blattfedern 612 befestigt, die bei geschlossenem Behälter den Stapel 608 gegen das Fenster 606 drücken. Die Lage der

Federn und des Lappens 610 relativ zueinander lassen sich auch Fig. 35 und 36 entnehmen; man erkennt, daß die freien Arme der dem Gelenk 602 näheren Feder zwischen Ausschnitte 614 des Lappens 610 greifen. Im geschlossenen Zustand wird der Behälter verriegelt durch einen Haken 616, der in eine Falle 618 des Unterteils 600 eingreift.

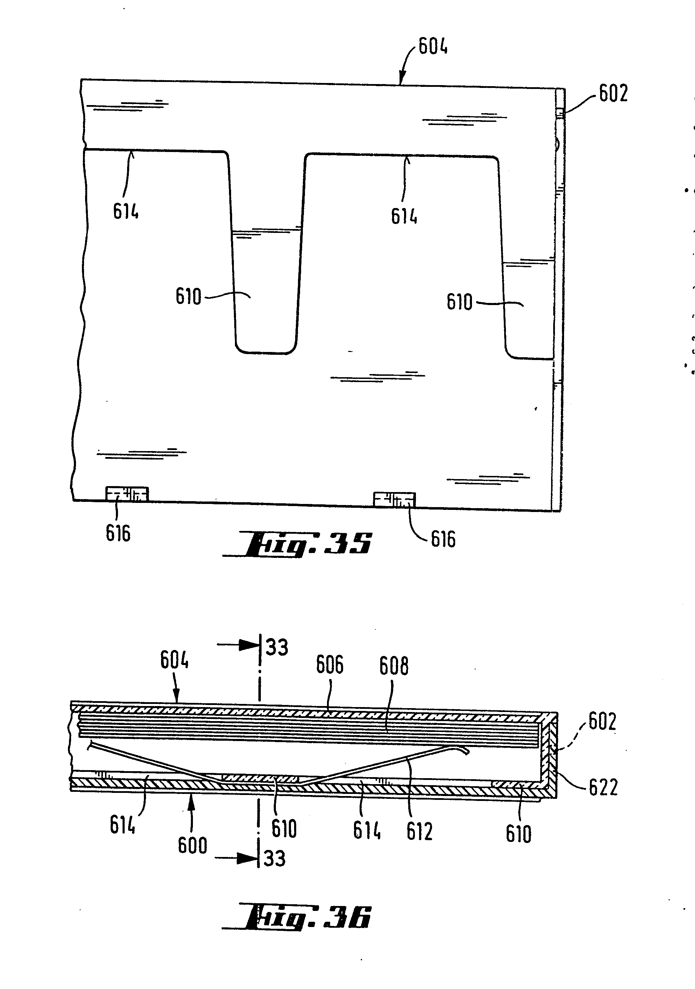

Es versteht sich, daß nach dem Öffnen des Behälters (Fig. 34) der Bilderstapel 608 in Richtung seiner Stapelkante 620 entnommen wird, da er an den beiden anderen, nicht vom Lappen 610 umgriffenen Kanten von den hochstehenden Wandungen 622 des Behälterunterteils abgestützt ist.

Soweit vorstehend Ausführungsformen beschrieben wurden, bei denen die Behälter aus zwei relativ zueinander geradlinig oder schwenkbeweglichen Bauteilen bestehen, ist es möglich, wie bei mindestens einem Ausführungsbeispiel erläutert, die beiden Teile in eine der vorgegebenen Endlagen mittels einer Feder vorzuspannen und sie in der anderen Endlage durch einen manuell lösbaren Mechanismus zu verriegeln. Ferner ist zu allen Ausführungsbeispielen anzumerken, daß es im allgemeinen erwünscht ist, wenn das am Fenster präsentierte Bild vollständig sichtbar ist, also seine Randpartien gar nicht oder nur ganz geringfügig abgedeckt sind. Wenn man jedoch andererseits aus ästhetischen Gründen rings um das Fenster einen Rahmen wünscht, sollte innerhalb des Behälters durch Anschläge dafür gesorgt werden, daß das präsentierte Bild zentriert unter dem Fenster liegt und nicht seitlich unter den Rahmen wegrutschen kann. Für einige Ausführungsbeispiele ist das jeweils erwähnt.

Ferner können bei den meisten Ausführungsformen, auch wenn dies nicht ausdrücklich beschrieben und dargestellt wurde, Aufstellfüße vorgesehen werden und/oder Ösen zum Aufhängen des betreffenden Behälters als Wandrahmen, und zwar sowohl im Hochformat als auch im Querformat.

Schließlich ist es bei den meisten beschriebenen Ausführungsformen auch möglich, an einer Behälterstirnseite ein Etikett anzubringen und die Behälter so auszubilden, daß sie im geschlossenen Zustand übereinanderstapelbar sind, wobei dann das Etikett den Behälterinhalt identifiziert; auch das Merkmal der Stapelbarkeit wurde bereits bei einigen Ausführungsbeispielen erörtert.

Ansprüche
-----------------

1) Behälter für einen Bilderstapel variabler Dicke mit einem Sichtfenster, an dem das oberste Bild des Stapels durch eine Anlegevorrichtung flach anliegend präsentiert wird, undmit mindestens zwei Bauteilen, die relativ zueinander zwischen einer Schließposition und einer Stapelentnahmeposition des Behälters beweglich sind, dadurch gekennzeichnet, daß eines der Bauteile als den Stapel än mindestens einer und höchstens drei seiner Kanten haltend ausgebildet ist und daß in der Stapelentnahmeposition die Bilder in Richtung einer freigebliebenen Kante entnehmbar sind.

2) Behälter nach Anspruch 1, dadurch gekennzeichnet, daß die beiden Teile zueinander schwenkbeweglich sind.

3) Behälter nach Anspruch 1, dadurch gekennzeichnet, daß die beiden Teile zueinander linearbeweglich sind.

4) Behälter nach Anspruch 1, dadurch gekennzeichnet, daß eines der Bauteile relativ zum anderen eine aus geraden und/oder gekrümmten Komponenten überlagerte Bewegung ausführen kann, um aus der Schließ- in die Entnahmeposition zu gelangen.

5) Behälter nach Anspruch 2 mit einer im wesentlichen quaderförmigen Ausbildung, dadurch gekennzeichnet, daß die beiden Bauteile um eine zur längsten Quaderseite parallele Achse relativbeweglich sind.

6) Behälter nach Anspruch 2 mit einer im wesentlichen quaderförmigen Ausbildung, dadurch gekennzeichnet, daß die beiden Teile um eine zur kürzesten Quaderseite parallele Achse relativverschwenkbar sind.

7) Behälter nach Anspruch 3, dadurch gekennzeichnet, daß die beiden Teile senkrecht zur Bilderhauptebene relativverschieblich sind.

8) Behälter nach Anspruch 7, dadurch gekennzeichnet, daß beide Teile teleskopartig ineinandersitzen.

9) Behälter nach Anspruch 7 oder 8, dadurch gekennzeichnet, daß die beiden Teile durch zwei zueinander senkrechte Relativbewegungen in die Entnahmeposition bringbar sind.

10) Behälter nach einem oder mehreren der vorangehenden Ansprüche, dadurch gekennzeichnet, daß das andere Bauteil eine Anschlagkante zum Zentrieren zumindest des präsentierten Bildes bezüglich des Fensters an denjenigen Stapelkanten aufweist, die nicht von dem einen Bauteil gehalten sind.

11) Behälter nach einem oder mehreren der vorangehenden Ansprüche, dadurch gekennzeichnet, daß das den Stapel haltende Bauteil zugleich mit dem Sichtfenster ausgestattet ist.

12) Behälter nach einem oder mehreren der vorangehenden Ansprüche, dadurch gekennzeichnet, daß die Anlegevorrichtung elastische Elemente umfaßt.

13) Behälter nach Anspruch 12, dadurch gekennzeichnet, daß die Anlegevorrichtung und die den Stapel haltenden Einrichtungen von volumenkompressiblen Streifen gebildet sind.

14) Behälter nach Anspruch 12, dadurch gekennzeichnet, daß die elastischen Elemente Federn sind.

15) Behälter nach Anspruch 14, dadurch gekennzeichnet, daß die Federn in dem anderen Bauteil montiert sind und in der Entnahmeposition entspannt sind.

16) Behälter nach einem der Ansprüche 1 bis 11, dadurch gekennzeichnet, daß die Anlegevorrichtung eine transparente Haftbeschichtung an der dem zu präsentierenden Bild zugewandten Seite einer glasklaren, das Sichtfenster überspannenden Scheibe ist.

17) Behälter nach einem der Ansprüche 1 bis 11, dadurch gekennzeichnet, daß die Anlegevorrichtung von Trennelementen gebildet ist, die hinter dem Sichtfenster eine schmale, zur Aufnahme nur eines Bildes bemessene Kammer begrenzen, hinter der eine den Reststapel aufnehmende Kammer liegt, und daß die mindestens eine gehaltene Kante auch die des Einzelbildes umfaßt.

18) Behälter nach einem oder mehreren der vorangehenden Ansprüche, dadurch gekennzeichnet, daß der Behälter für die Verwendung als Hängerahmen mindestens eine Aufhängeöse besitzt.

19) Behälter nach einem oder mehreren der vorangehenden Ansprüche, dadurch gekennzeichnet, daß der Behälter mit weiteren, gleichartigen Behältern stapelbar ist.

20) Behälter nach einem oder mehreren der vorangehenden Ansprüche, dadurch gekennzeichnet, daß der Behälter an einer quer zu seinem Sichtfenster verlaufenden Seitenwandung mit einem Etikett versehen ist.

21) Behälter nach einem oder mehreren der vorangehenden Ansprüche, gekennzeichnet durch einen Ausklappständer.

**Fig:1**

50

52

54

56

58

66

66

62

62

64

64

64

68

70

70

72

72

72

72

84

3

3

2

2

0105456

Fig. 3

Fig. 4

Fig. 2

**Fig.5**

**Fig.6**

**Fig.7**

*Fig: 8*

*Fig: 9*

*Fig.11*

*Fig.10*

*Fig.12*

*Fig.13*

0105456

Fig. 14.

Fig. 15

0105456

**Fig.16**

9/16

**Fig. 17**

280
284
282
290 292 288 286

**Fig. 18**

280
284
282
282
292
284
288

302    312    308

## Fig. 19

300    304    304

308    306    302    312    306

304    300    304    310

## Fig. 20

310    318

0105456

Fig. 21

12/16

Fig. 22

Fig. 23

Fig. 24

Fig. 25

0105456

0105456

Fig. 26

Fig. 27

Fig. 28

14/16

**Fig. 29**

506  504  30  508

512

512

510  502  500  30  502  510

**Fig. 30**

512  506  508  504  512  514

500  502  510  516

500

502

**Fig. 31**

512  508  510  512

516

506

**Fig. 32**

## Fig. 33

## Fig. 34

0105456

**Fig: 35**

**Fig: 36**